# FASCICULE DE BREVET EUROPEEN

(11) **EP 1 644 868 B1**
(45) Date de publication et mention de la délivrance du brevet: **20.08.2008**
(21) Numéro de dépôt: 04767886.7
(22) Date de dépôt: 09.07.2004
(51) Int. Cl.: G06K 9/00

(54) **DISPOSITIF D IMAGERIE OPTIQUE**
OPTISCHE BILDER-EINRICHTUNG
OPTICAL IMAGERY DEVICE

(30) Priorité: 09.07.2003 FR 0308426
(43) Date de publication de la demande: 12.04.2006
(73) Titulaire: New Imaging Technologies, 91011 Evry Cedex (FR)
(72) Inventeur: NI, Yang, F-91120 Palaiseau (FR)
(74) Mandataire: Tanty, François
(86) Numéro de dépôt international: PCT/FR2004/050325
(87) Numéro de publication internationale: WO 2005/006241

(56) Documents cités:
- EP-A- 0 609 812
- EP-A- 1 022 675
- EP-A- 1 104 908
- WO-A-92/20037
- US-A- 5 619 586
- US-B1- 6 182 892
- DRAKE M D ET AL: "WAVEGUIDE HOLOGRAM FINGERPRINT ENTRY DEVICE" OPTICAL ENGINEERING, SOC. OF PHOTO-OPTICAL INSTRUMENTATION ENGINEERS. BELLINGHAM, US, vol. 35, no. 9, 1 septembre 1996 (1996-09-01), pages 2499-2505, XP000633939 ISSN: 0091-3286
- PATENT ABSTRACTS OF JAPAN vol. 013, no. 224 (C-599), 24 mai 1989 (1989-05-24) & JP 01 037934 A (METEOOLA SYST KK; others: 03), 8 février 1989 (1989-02-08)

## Description

La présente invention concerne les dispositifs d'imagerie optique et plus particulièrement, mais non exclusivement, ceux destinés à la reconnaissance d'empreintes digitales.

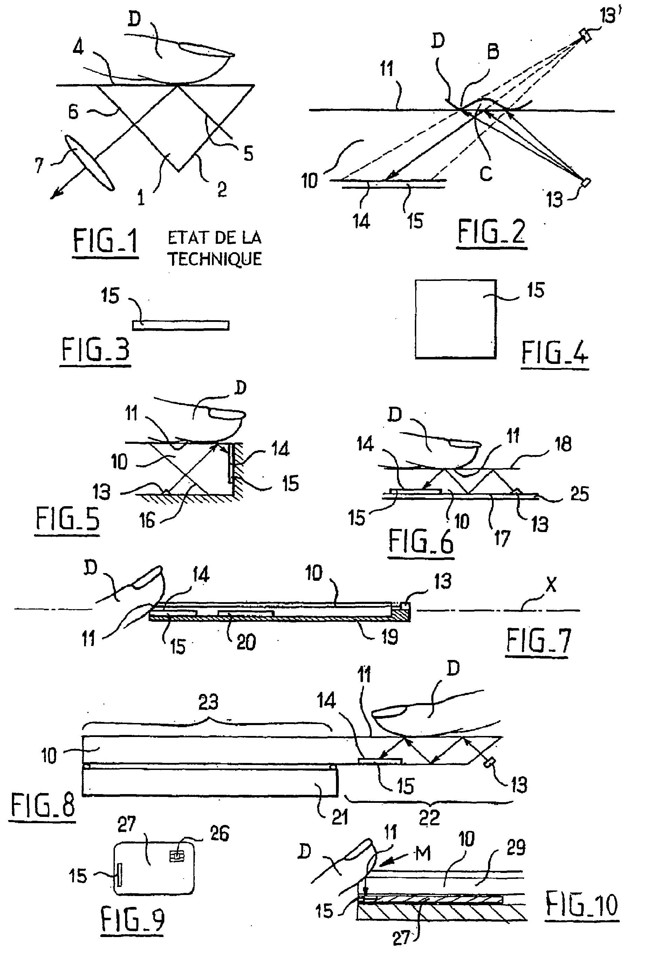

Un exemple de dispositif d'imagerie optique réalisé conformément à l'art antérieur est représenté de manière schématique à la figure 1.

Ce dispositif comporte un prisme 1. Un faisceau lumineux 5 émis par une source de lumière non représentée pénètre dans ce prisme 1 par une première face 2 de celui-ci. Une deuxième face 4 du prisme 1 définit une surface de détection sur laquelle un doigt D peut être posé. En l'absence de ce dernier, la lumière subit une réflexion totale vers la troisième face 6 du prisme 1. Le faisceau lumineux 5 subit, au niveau des reliefs du doigt D en contact avec la surface de détection, une réflexion frustrée, ce qui permet la formation d'une image sur un capteur d'image, de type CCD ou CMOS, non représenté, après traversée d'une lentille de focalisation 7. Cette dernière doit être de focale relativement longue, afin d'éliminer la composante diffusée, ce qui nuit à la compacité du dispositif.

Le brevet US 6 381 347 décrit un dispositif d'imagerie optique assez similaire.

Les brevets US 6 259 108 et US 6 355 937 visent notamment à diminuer l'encombrement du dispositif en utilisant un système de lentilles particulier pour former l'image. Toutefois, les agencements proposés sont particulièrement complexes et coûteux à réaliser.

La demande de brevet européen EP 1 022 675 décrit un dispositif de lecture d'image comportant une pluralité de photorécepteurs disposés selon un réseau bidimensionnel. La lumière est émise depuis un tube à cathode froide qui s'étend sur toute la largeur du dispositif.

Le brevet US 5 619 586 décrit un dispositif de lecture d'empreinte digitale utilisant une caméra et une source de lumière parallèle.

EP 0 609 812 décrit un dispositif de lecture d'empreintes digitales utilisant un système optique comportant des réseaux de diffraction ainsi que des lentilles de diffraction.

La demande de brevet européen EP 1 104 908 décrit un dispositif de lecture d'empreinte digitale qui utilise deux prismes et dans lequel une lentille est placée devant un capteur CCD.

FR 2 778 548 divulgue un capteur optique d'empreinte digitale comportant un corps de transmission optique à l'extérieur duquel des moyens d'éclairage sont disposés.

Le brevet US 6 182 892 décrit un procédé d'authentification d'empreinte digitale dans lequel une carte ayant un format de carte de crédit est utilisée pour transmettre une image d'une empreinte digitale à un scanner.

L'article « WAVEGUIDE HOLOGRAM FINGERPRINT ENTRY DEVICE » OPTICAL ENGINEERING, SOC. OF PHOTO-OPTICAL INSTRUMENTATION ENGINEERS - BELLINGHAM US, Vol.35, n° 9, décrit un dispositif qui utilise un guide d'ondes holographique.

Il existe un besoin pour bénéficier d'un dispositif perfectionné qui puisse être fabriqué d'une manière fiable, avec un encombrement réduit et un coût compatible avec une utilisation à grande échelle.

La présente invention vise notamment à répondre à ce besoin.

L'invention a pour objet, selon un premier de ses aspects, un dispositif d'imagerie optique, comportant :
- une source de lumière,
- un milieu optique dans lequel la lumière provenant de la source de lumière peut se propager,
- une surface de détection définie par une frontière du milieu optique,
- un capteur d'image vers lequel la lumière provenant de la source et subissant une réflexion sur la surface de détection est réfléchie,
   ce dispositif pouvant se caractériser par le fait qu'il est agencé de telle sorte que la source lumineuse apparaisse depuis le capteur d'image comme étant suffisamment ponctuelle pour qu'une image puisse se former directement sur le capteur d'image, sans système de lentilles, par le fait que la source de lumière est une diode électroluminescente ou laser dépourvue de diffuseur ou de lentille et par le fait che la source est située dans le milieu optique.

Par « image se formant directement », il faut comprendre au sens de la présente invention que l'image peut se former sans système de lentilles, suivant les lois de projection de l'optique géométrique.

L'invention présente de nombreux avantages.

Tout d'abord, le dispositif est plus facilement miniaturisable et gagne en solidité et fiabilité.

En outre, sa fabrication est moins complexe, ce qui permet de diminuer son coût et de généraliser son utilisation.

Enfin, la consommation électrique de la source lumineuse peut être diminuée, ce qui permet notamment d'accroître l'autonomie dans le cas où le dispositif d'imagerie optique est utilisé sur des appareils portables tels que par exemple des téléphones ou assistants personnels numériques.

La source de lumière peut être vue depuis le capteur d'image avec une taille compatible avec la résolution du capteur. Par exemple, pour un capteur ayant des cellules de détection dont la taille est de 50 µm environ, deux rayons issus de deux points extrêmes de la source et passant par le même point de la surface de détection peuvent avoir des images distantes de moins de 100 µm sur le plan d'observation défini par le capteur, mieux une distance inférieure ou égale à la taille d'une cellule de détection du capteur.

La source de lumière peut être située dans le milieu optique.

Le capteur d'image peut être situé dans le milieu optique ou hors de celui-ci. Le capteur d'image et le milieu optique peuvent notamment être séparés ou non par une couche d'air.

Le capteur d'image peut être séparable ou non du milieu optique. Le capteur d'image peut notamment être intégré à un support amovible tel qu'une carte de paiement ou d'accès ou une clé ou tout autre objet personnel et le milieu optique appartenir à un lecteur adapté à coopérer avec le support.

Le support peut ne comporter que le capteur et éventuellement des contacts électriques agencés pour transmettre des données provenant du capteur au lecteur. Le cas échéant, le support peut comporter au moins un micro-circuit comportant par exemple un processeur et/ou au moins une mémoire.

Un avantage dans la possibilité de séparer le capteur du milieu optique est notamment que c'est le même capteur qui peut être utilisé avec plusieurs lecteurs différents, ce qui peut permettre d'accroître encore la fiabilité de la reconnaissance d'une image ou d'une signature analogue ou numérique correspondant à une empreinte.

Le dispositif peut être agencé de telle sorte que la lumière émise par la source et atteignant le capteur d'image ne se réfléchisse que sur la surface de détection. En variante, le dispositif peut être agencé de telle sorte que la lumière émise par la source et atteignant le capteur d'image subisse au moins deux réflexions, notamment dans le milieu optique, avant d'atteindre le capteur.

Le capteur peut être linéaire ou matriciel.

La source de lumière peut être modulée, notamment en intensité, afin d'augmenter le rapport signal/bruit, le capteur d'image pouvant être accordé à cette modulation de la source. Un exemple de modulation pouvant être utilisée parmi d'autres est décrit dans la publication Y. Ni. X.L. Yan, "CMOS Active Differential Imaging Device with Single in-pixel Analog Memory", ESSCIRC' 02, 24-26 Sept. 2002 Florence, Italy, pp. 359-362.

La source de lumière peut émettre dans plusieurs longueurs d'ondes, situées dans le domaine du visible, de l'infrarouge ou des ultraviolets, et le capteur d'image être agencé pour analyser des images correspondant à chacune de ces longueurs d'ondes. Au moins deux analyses des images formées respectivement à deux longueurs d'ondes différentes peuvent permettre, le cas échéant, d'améliorer la fiabilité de la détection.

Dans un exemple de mise en oeuvre de l'invention, la source se situe sous le niveau de la surface du capteur d'image. Une telle disposition permet d'une manière simple d'éviter que la lumière émise par la source n'atteigne directement le capteur d'image.

La source peut par exemple être située dans un renfoncement d'un circuit imprimé, notamment un circuit imprimé multicouche.

Dans un exemple de mise en oeuvre de l'invention, le dispositif comporte un bloc d'une matière transparente recouvrant le capteur et la source, définissant au moins partiellement le milieu optique.

Ce bloc peut par exemple être moulé ou collé sur le capteur et la source. Dans le cas d'un collage, celui-ci peut s'effectuer au moyen d'une colle transparente, par exemple une colle polymérisable par exposition aux rayons ultraviolets.

Avantageusement, le bloc précité comporte au-dessus du capteur des moyens permettant de réduire la quantité de lumière parasite atteignant le capteur. Ces moyens peuvent par exemple comporter une surface dépolie et/ou un masque, sensiblement à l'aplomb du capteur.

La matière du bloc peut par exemple être choisie en fonction de la longueur d'onde de la source, de manière à faciliter la propagation de la lumière émise par la source tout en atténuant la propagation des lumières parasites.

L'invention pourra être mieux comprise à la lecture de la description détaillée qui va suivre, d'exemples de mise en oeuvre non limitatifs de celle-ci, et à l'examen du dessin annexé, sur lequel :
- la figure 1, précédemment décrite, illustre un dispositif selon l'art antérieur,
- la figure 2 représente de manière schématique un premier exemple de dispositif selon l'invention,
- les figures 3 et 4 représentent respectivement, de manière schématique, des capteurs d'image linéaire et matriciel, et
- les figures 5 à 8 représentent, de manière schématique et partielle, en coupe, différents exemples, parmi d'autres, de dispositifs d'imagerie conformes à l'invention,
- la figure 9, représente en vue de dessus un exemple de carte comportant un capteur d'image,
- la figure 10 représente en coupe longitudinale partielle et schématique un exemple de lecteur adapté à coopérer avec la carte de la figure 9,
- la figure 11 est une vue schématique et partielle représentant un ensemble comportant un capteur et une source selon un exemple de mise en oeuvre de l'invention,
- la figure 12 est une coupe schématique et partielle selon XII-XII de la figure 11, et
- la figure 13 illustre l'utilisation d'un dispositif réalisé conformément à l'invention dans une vitrine.

Le dispositif d'imagerie optique représenté à la figure 2 comporte un milieu optique 10 dont une frontière avec l'air définit une surface de détection 11 sur laquelle peut être posé un doigt D, en vue de l'analyse d'une empreinte digitale par exemple.

Ce doigt D présente localement des zones B en relief venant au contact de la surface de détection 11 et des sillons C situés en retrait.

La surface de détection 11 est éclairée par une source lumineuse 13. En l'absence de doigt D, la réflexion de la lumière sur la surface de détection 11 est totale. En présence du doigt D, il se crée à l'interface avec la peau une réflexion frustrée.

Conformément à un aspect de l'invention, la source 13 se comporte comme une source sensiblement ponctuelle, lorsqu'observée après réflexion sur la surface de détection 11 depuis un plan d'observation 14 défini par un capteur d'image 15.

Suivant les lois de l'optique géométrique, une image peut être observée sur le plan d'observation 14, cette image correspondant dans l'exemple de la figure 2 à celle que l'on obtiendrait avec une source 13' symétrique de la source 13 par rapport au plan de la surface de détection 11 et dont seuls les rayons passant par les zones de non contact entre la peau et la surface de détection 11 seraient reçus par le plan d'observation 14, la source 13' projetant en quelque sorte l'« ombre » des zones de contact entre la peau et la surface de détection sur le plan d'observation 14.

Le milieu optique 10 peut être constitué par tout matériau transparent, coloré ou non, tel qu'un verre minéral ou organique, plus dense que l'air.

Le milieu optique 10 peut notamment comporter une matière plastique solide à température ambiante et transparente à au moins une longueur d'onde de la lumière émise par la source 13 et détectée par le capteur 15.

La couleur du milieu optique 10 pourra être choisie de manière à favoriser la propagation de la lumière émise par la source 13 tout en atténuant la lumière ayant une longueur d'onde autre, de façon à diminuer la quantité de lumière parasite atteignant le capteur 15.

Le capteur d'image 15 peut être relié à tout dispositif de traitement approprié, non représenté, agencé par exemple pour reconstituer une image plus complète à partir des données délivrées par le capteur 15 et/ou identifier à partir d'au moins une image reçue par le capteur 15 une personne ayant posé, et le cas échéant déplacé, son doigt sur la surface de détection 11.

Le terme « image » ne doit pas être compris avec un sens restrictif et une image peut être réduite par exemple à un point lumineux ou sombre dans le plan d'observation 14.

Le dispositif de traitement peut notamment comporter et/ou accéder à une mémoire dans laquelle sont enregistrées une ou plusieurs images d'empreintes digitales et/ou des signatures correspondantes, et le dispositif de traitement peut être agencé pour comparer toute nouvelle image reçue par le capteur 15 et/ou la signature correspondante à des données préalablement mémorisées.

Le capteur d'image 15 peut être par exemple un capteur linéaire tel que représenté à la figure 3 ou un capteur matriciel tel que représenté à la figure 4, de type CCD ou CMOS ou autre.

Un capteur linéaire comporte par exemple une ou plusieurs barrettes de cellules de détection mises bout à bout, chaque barrette comportant par exemple au moins 256 cellules.

Un capteur matriciel comporte par exemple au moins 2 lignes d'au moins 256 cellules.

L'utilisation d'un capteur linéaire ou matriciel comportant un faible nombre de lignes peut permettre d'analyser une image de taille réduite avec moins de distorsions qu'une image de plus grandes dimensions. Lorsqu'un capteur linéaire est utilisé, celui-ci peut être associé le cas échéant à un mécanisme entraîné en mouvement lors du passage du doigt, de manière à synchroniser la détection avec le déplacement du doigt.

Un capteur linéaire ou matriciel comportant peu de lignes pourra être utilisé notamment lorsque le doigt D est déplacé sur la surface de détection 11 dans une direction perpendiculaire à l'axe longitudinal de celle-ci, chaque image acquise par le capteur 15 correspondant alors à une bande relativement étroite de la surface du doigt.

Le capteur d'image 15 peut être agencé pour analyser une image à une ou plusieurs longueurs d'ondes particulières.

De préférence, de manière à s'affranchir de l'éclairage ambiant, la source 13 émet une lumière modulée en intensité et le capteur 15 est accordé sur la fréquence de modulation de la source 13. Ainsi, l'information portée par la lumière provenant de la source 13 peut être isolée davantage du bruit ambiant et le rapport signal/bruit est augmenté.

L'image recueillie dans le plan d'observation 14 est d'autant plus nette que la source 13 est ponctuelle, en raison de ses dimensions et/ou de son éloignement. La diminution de la source 13 et son éloignement permettent également de diminuer la taille de l'image formée sur le plan d'observation, donc celle du capteur 15 utilisé, la surface couverte par l'image que l'on cherche à former étant de préférence voisine de celle couverte par les cellules de détection du capteur 15.

Il peut également s'avérer souhaitable que la distance entre la surface de détection 11 et le capteur 15 soit la plus réduite possible.

La surface de détection 11 peut par exemple s'étendre sur une largeur comparable à celle d'une empreinte digitale.

Pour réaliser la source 13, on peut avoir intérêt à utiliser un composant optique miniature, par exemple une seule diode électroluminescente ou laser, dépourvue de diffuseur ou de lentille, et éloigner la source 13 du plan d'observation 14, grâce par exemple à des réflexions multiples. Le cas échéant, la source 13 peut comporter un masque non représenté, pourvu d'une ouverture unique de petites dimensions, permettant la sortie de la lumière de manière ponctuelle.

La source 13 peut également comporter, le cas échéant, une fibre optique. La lumière peut notamment être émise par l'extrémité de cette fibre optique.

Les réflexions multiples peuvent être des réflexions internes, à l'interface entre le milieu optique 10 et l'air ou entre le milieu optique 10 et un autre milieu d'indice moindre, et/ou des réflexions sur des surfaces réfléchissantes, notamment des surfaces métallisées, externes ou internes au milieu optique 10.

Les orientations et dispositions relatives du plan d'observation 14 et de la surface de détection 11 peuvent être diverses.

On a représenté à la figure 5 un autre exemple de mise en oeuvre de l'invention, dans lequel la surface de détection 11 est orientée sensiblement à 90° du plan d'observation 14. La figure 5, bien que représentant une source située hors du milieu optique, ce qui n'est pas compris dans l'objet des revendications, est utile à la compréhension d'aspects particuliers de l'invention.

De plus, dans cet exemple, la source 13 se situe hors du milieu optique 10 et la lumière pénètre dans celui-ci perpendiculairement à une face 16 de celui-ci, le dispositif étant agencé de manière à ce qu'il n'y ait qu'une seule réflexion sur la surface de détection 11.

Dans l'exemple de la figure 6, il y a plusieurs réflexions intermédiaires entre la source 13 et le plan d'observation 14, ce qui permet d'éloigner optiquement la source 13 du plan d'observation 14 et d'utiliser par exemple un milieu optique 10 peu épais, se présentant par exemple sous la forme d'une lame.

Dans cet exemple, la lumière se propage, avant d'atteindre la surface de détection 11, en se réfléchissant successivement sur deux faces 17 et 18 définissant un guide optique. La surface de détection 11 se situe dans le prolongement de la face 16, laquelle est plane dans l'exemple considéré. La face 17, également plane, est parallèle à la face 16 et se situe au contact d'un support 25 qui porte le capteur 15.

Dans l'exemple de la figure 7, le dispositif présente une forme générale allongée selon un axe longitudinal X et la surface de détection 11 se situe à une extrémité axiale du dispositif. Ce dernier se présente par exemple sous la forme d'une carte, laquelle peut comporter en outre, par exemple, des contacts électriques et/ou une antenne permettant d'échanger des informations à distance. La carte peut notamment comporter des contacts permettant l'alimentation électrique de la source 13.

Le milieu optique 10 recouvre un support 19 qui porte, dans l'exemple considéré, outre la source 13 et le capteur d'image 15, un circuit 20 de traitement de données provenant du capteur 15.

Dans l'exemple de cette figure, la lumière émise par la source 13 se propage sensiblement parallèlement au support 19 avant d'atteindre la surface de détection 11, où elle est réfléchie vers le capteur 15.

Le milieu optique 10 peut ne servir qu'à la propagation de la lumière émise par la source 13 en vue de l'analyse de l'image formée après réflexion frustrée sur la surface de détection 11.

Le milieu optique 10 peut également exercer au moins une autre fonction, et notamment servir à protéger un afficheur 21, comme illustré sur la figure 8, notamment celui d'un terminal portable. La figure 8, bien que représentant une source située hors du milieu optique, ce qui n'est pas compris dans l'objet des revendications, est utile à la compréhension d'aspects particuliers de l'invention.

Dans cet exemple, le milieu optique 10 présente une première portion 22, dans laquelle la lumière émise par la source 13 se propage jusqu'au capteur 15, cette première portion définissant la surface de détection 11, et une deuxième portion 23, passive, recouvrant l'afficheur 21. Le cas échéant, la première portion peut recouvrir au moins partiellement l'afficheur 21.

Le capteur 15 peut être séparable du milieu optique 10 et notamment être intégré à un support tel qu'une carte de paiement ou d'accès, comportant par ailleurs des moyens permettant d'échanger des données, tels que par exemple des contacts électriques ou un dispositif radiofréquence.

A titre d'exemple, on a représenté à la figure 10 une carte de paiement 27 comportant un capteur 15, par exemple linéaire, et un micro-circuit 26 comportant des contacts électriques.

La carte 27 est destinée à être reçue dans un lecteur 29 comportant une source de lumière et un dispositif de lecture du micro-circuit 26, non représentés.

La carte 27 est disposée sous le milieu optique 10 du lecteur 29, la surface de détection 11 étant agencée de manière à ce que la lumière provenant de la source soit réfléchie sur le capteur 15 lorsque la carte 27 est en place.

L'utilisateur qui a introduit la carte 27 dans le lecteur 29 peut déplacer son doigt D dans le sens de la flèche M sur la surface de détection 11, ce qui permet la lecture d'une succession d'images par le capteur 15, cette succession étant représentative de l'empreinte digitale. La lecture de l'empreinte peut remplacer par exemple l'entrée d'un code confidentiel sur un clavier. Les données peuvent être transmises par le capteur 15 au micro-circuit 26 puis au lecteur 29.

La carte 27 peut être remplacée par tout autre objet, tel qu'une clé par exemple.

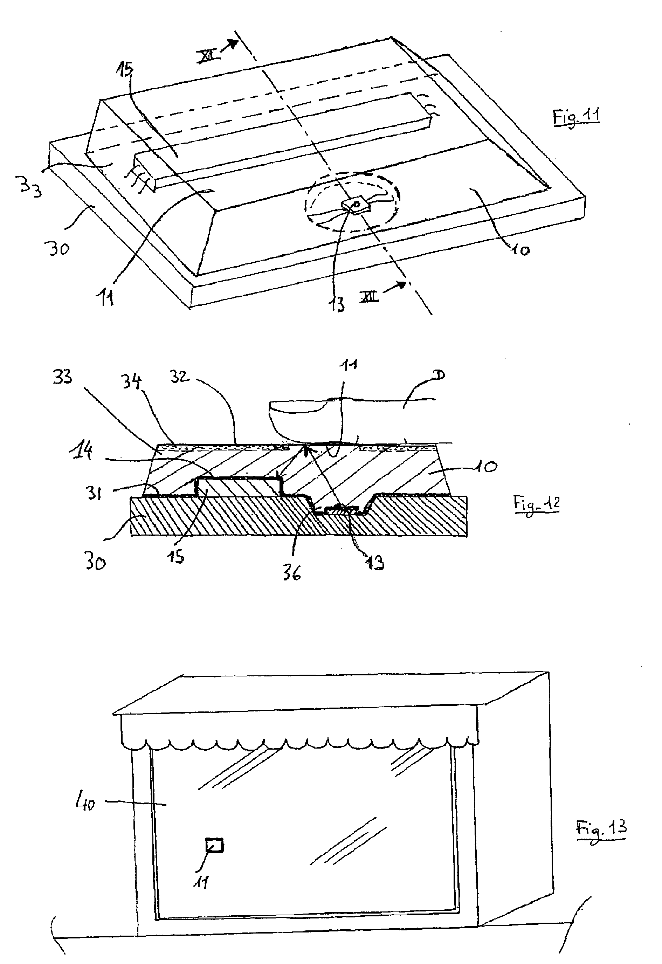

On a représenté aux figures 11 et 12 un ensemble comportant sur un circuit imprimé 30, une source 13 et un capteur 15, lesquels peuvent être recouverts d'un milieu optique 10 constitué par exemple par un bloc 33 d'une matière transparente, minérale ou organique. Ce bloc 33 peut être fixé sur le circuit 30 au moyen d'une couche 31 d'une colle transparente et relativement fluide, par exemple une colle polymérisable par exposition au rayonnement ultraviolet.

On peut voir sur la figure 12 que la source 13 se situe sous le niveau de la surface du capteur 15 définissant le plan d'observation 14, de sorte que la lumière émise par la source 13 ne peut gagner directement ce plan d'observation 14.

On peut voir en outre sur la figure 12 que la surface extérieure 32 du bloc 33 est avantageusement dépolie ou comporte un masque dans sa région 34 située à l'aplomb du plan d'observation 14, ce qui permet de réduire la quantité de lumière parasite susceptible d'atteindre le plan d'observation 14.

Le renfoncement 36 accueillant la source 13 est par exemple formé par enlèvement d'une couche du circuit imprimé 30 lorsque celui-ci présente une structure multicouche.

Un dispositif d'imagerie optique selon l'invention peut être utilisé pour des applications autres que l'identification et le contrôle d'accès, et notamment peut servir à commander un curseur ou autre objet, matériel ou immatériel, par analyse du déplacement du doigt ou d'un objet inanimé tel qu'un stylet, sur la surface de détection 11.

Le capteur 15 peut notamment être associé à un dispositif de traitement capable de déterminer le mouvement d'un doigt relativement à la surface de détection, dans une direction au moins, et de préférence dans deux directions perpendiculaires entre elles. La surface de détection 11 peut alors, par exemple, remplacer le bouton de navigation d'un téléphone portable.

Le dispositif peut encore être utilisé pour acquérir des images de zones non dermatoglyphiques du corps humain, afin par exemple d'analyser le micro-relief de la peau, dans un but cosmétique ou dermatologique.

Le dispositif peut être associé à un terminal de paiement ou autre dispositif informatique, de téléphonie ou de diagnostic.

Un dispositif selon l'invention peut encore être intégré à une vitrine 40, comme illustré à la figure 13, afin de permettre à un passant d'interroger la vitrine pour obtenir par exemple des informations concernant des services offerts ou les objets exposés.

Le dispositif selon l'invention peut encore être intégré à un écran tactile.

Dans l'exemple de la figure 13, on n'a représenté qu'un seul dispositif selon l'invention, mais il va de soi que l'on peut munir la vitrine ou l'écran tactile de plusieurs dispositifs selon l'invention.

Le bloc 33 de l'exemple de la figure 12 peut encore être remplacé par une résine coulée encapsulant supérieurement au moins la source 13 et le capteur 15.

Le capteur 15 peut comporter plus d'une rangée de détecteurs élémentaires, par exemple au moins deux rangées de détecteurs, afin notamment de permettre de mesurer une vitesse de déplacement du doigt sur la surface de détection, ce qui peut améliorer la qualité de l'image de l'empreinte digitale et faciliter la reconnaissance de celle-ci.

La détermination de la vitesse de défilement du doigt peut par exemple s'effectuer en déterminant le temps mis pour qu'une ligne de l'image lue par l'une des rangées du capteur soit lue par l'autre rangée.

Bien entendu, les caractéristiques des différents modes de réalisation qui viennent d'être décrits peuvent être combinées entre elles sans que l'on ne sorte du cadre de la présente invention.

Diverses modifications peuvent encore être apportées aux exemples décrits. La surface de détection peut notamment être non plane, par exemple.

Dans toute la description, y compris les revendications, l'expression « comportant un » doit être comprise comme étant synonyme de « comportant au moins un », sauf si le contraire est spécifié.

## Revendications

1. Dispositif d'imagerie optique, comportant :
- une source de lumière (13),
- un milieu optique (10) dans lequel la lumière provenant de la source (13) peut se propager,
- une surface de détection (11) définie par une frontière du milieu optique (10),
- un capteur d'image (15) vers lequel la lumière provenant de la source (13) et subissant une réflexion sur la surface de détection (11) est réfléchie,
ce dispositif étant **caractérisé par le fait qu'**il est agencé de telle sorte que la source (13) apparaisse depuis le capteur (15) comme étant suffisamment ponctuelle pour qu'une image puisse se former directement sur le capteur (15) sans système de lentilles, **par le fait que** la source de lumière est une diode électroluminescente ou laser dépourvue de diffuseur ou de lentille et **par le fait que** la source (13) est située dans le milieu optique.

2. Dispositif selon la revendication 1, **caractérisé par le fait que** deux rayons issus de deux points extrêmes de la source et passant par le même point de la surface de détection ont des images sur le capteur (15) distantes de moins de 100 µm, notamment de moins de 50 µm.

3. Dispositif selon l'une des revendications précédentes, **caractérisé par le fait que** le capteur (15) est situé dans le milieu optique (10).

4. Dispositif selon l'une des revendications 1 et 2, **caractérisé par le fait que** le capteur (15) est situé hors du milieu optique (10).

5. Dispositif selon l'une quelconque des revendications précédentes, **caractérisé par le fait qu'**il est agencé de telle sorte que la lumière émise par la source (13) et atteignant le capteur (15) ne se réfléchisse que sur la surface de détection (11).

6. Dispositif selon l'une quelconque des revendications 1 à 4, **caractérisé par le fait qu'**il est agencé de telle sorte que la lumière émise par la source (13) subisse au moins deux réflexions, notamment dans le milieu optique (10), avant d'atteindre le capteur (15).

7. Dispositif selon l'une quelconque des revendications précédentes, **caractérisé par le fait que** le capteur (15) est linéaire.

8. Dispositif selon l'une quelconque des revendications 1 à 6, **caractérisé par le fait que** le capteur (15) est matriciel.

9. Dispositif selon l'une quelconque des revendications précédentes, **caractérisé par le fait que** la source (13) est modulée.

10. Dispositif selon l'une quelconque des revendications précédentes, **caractérisé par le fait que** la source (13) émet dans plusieurs longueurs d'ondes et **par le fait que** le capteur (15) est agencé pour analyser des images correspondant à chacune de ces longueurs d'ondes.

11. Dispositif selon l'une quelconque des revendications précédentes, **caractérisé par le fait que** le capteur (15) est séparable du milieu optique (10), le capteur étant notamment intégré à un support amovible tel qu'une carte de paiement ou d'accès (27) et **par le fait que** le milieu optique (10) appartient à un lecteur (29) adapté à coopérer avec ce support (27), le support (27) comportant éventuellement au moins un micro-circuit (26), notamment un micro-circuit comportant un processeur et/ou au moins une mémoire.

12. Dispositif selon l'une quelconque des revendications précédentes, **caractérisé par le fait que** la source (13) se situe sous le niveau de la surface du capteur (15).

13. Dispositif selon la revendication 12, **caractérisé par le fait que** la source est située dans un renfoncement d'un circuit imprimé, notamment un circuit imprimé multicouche.

14. Dispositif selon l'une quelconque des revendications précédentes, **caractérisé par le fait que** le dispositif comporte un bloc (33) d'une matière transparente recouvrant le capteur (15) et la source (13).

15. Dispositif selon la revendication 14, **caractérisé par le fait que** le bloc est moulé sur le capteur et la source.

16. Dispositif selon la revendication 14, **caractérisé par le fait que** le bloc est collé sur le capteur de la source.

17. Dispositif selon la revendication 16, **caractérisé par** le fait le bloc est collé au moyen d'une colle polymérisable par expositions aux rayons ultraviolets.

18. Dispositif selon la revendication 14, **caractérisé par le fait que** le bloc (33) comporte au-dessus du capteur (15) des moyens permettant de réduire la quantité de lumière parasite atteignant le capteur.

19. Dispositif selon la revendication 18, **caractérisé par le fait que** lesdits moyens comportent une surface dépolie.

20. Dispositif selon la revendication 18, **caractérisé par le fait que** lesdits moyens comportent un masque.

21. Dispositif selon la revendication 14, **caractérisé par le fait que** la couleur de la matière du bloc (33) est choisie en fonction de la longueur d'onde de la source, de manière à faciliter la propagation de la lumière émise par la source tout en atténuant la propagation des lumières parasites.

## Claims

1. An optical imaging device, comprising:
- a light source (13);
- an optical medium (10) in which the light coming from the source (13) can propagate;
- a detection surface (11) defined by one boundary of the optical medium (10); and
- an image sensor (15) toward which the light coming from the source (13) and undergoing a reflection on the detection surface is reflected,
this device being **characterized by** the fact that it is configured so that the source (13) appears from the sensor (15) as being sufficiently point-like for an image to be able to form directly on the sensor (15) without a lens system, by the fact that the light source is a single light-emitting diode or laser diode with no diffuser or lens and by the fact that the light source (13) is located in the optical medium.

2. The device as defined in claim 1, **characterized by** the fact that two rays emanating from two extreme points of the source and passing through the same point on the detection surface form images on the sensor (15) that are separated by less than 100 µm, in particular by less than 50 µm.

3. The device as defined in any preceding claim, **characterized by** the fact that the sensor (15) is located in the optical medium (10).

4. The device as defined in claim 1 or 2, **characterized by** the fact that the sensor (15) is located outside the optical medium (10).

5. The device as defined in any preceding claim, **characterized by** the fact that it is configured so that the light emitted by the source (13) and reaching the sensor (15) is reflected only on the detection surface (11).

6. The device as defined in any one of claims 1 to 4, **characterized by** the fact that it is configured so that the light emitted by the source (13) undergoes at least two reflections, in particular in the optical medium (10), before reaching the sensor.

7. The device as defined in any preceding claim, **characterized by** the fact that the sensor (15) is a linear sensor.

8. The device as defined in any one of claims 1 to 6, **characterized by** the fact that the sensor (15) is a matrix sensor.

9. The device as defined in any preceding claim, **characterized by** the fact that the source (13) is modulated.

10. The device as defined in any preceding claim, **characterized by** the fact that the source (13) emits at several wavelength and **characterized by** the fact that the sensor (15) is configured to analyze images corresponding to each of these wavelengths.

11. The device as defined in any preceding claim, **characterized by** the fact that the sensor (15) is separable from the optical medium (10), the sensor being in particular integrated to a removable support such as a payment or access card (27) and by the fact that the optical medium (10) belongs to a reader (20) configured to cooperate with the support ( 27), the removable support (27) comprising optionally at least one microcircuit (26), in particular a microcircuit comprising a processor and/or at least a memory.

12. The device as defined in any preceding claim, **characterized by** the fact that the source (13) lies below the level of the surface of the sensor (15).

13. The device as defined in claim 12, **characterized by** the fact that the source is located in a recess in a printed circuit, in particular a multilayer printed circuit.

14. The device as defined in any preceding claim, **characterized by** the fact that it comprises a block (33) of a transparent material covering the sensor (15) and the source (13).

15. The device as defined in claim 14, **characterized by** the fact that the block is molded over the sensor and the source.

16. The device as defined in claim 14, **characterized by** the fact that the block is bonded to the sensor and the source.

17. The device as defined in claim 16, **characterized by** the fact that the block is bonded via an ultraviolet-curable adhesive.

18. The device as defined in claim 16, **characterized by** the fact that the block includes, on top of the sensor (15), means for reducing an amount of stray light reaching the sensor.

19. The device as defined in claim 18, **characterized by** the fact that said means comprise a delustered surface.

20. The device as defined in claim 18, **characterized by** the fact that said means comprise a mask.

21. The device as defined in claim 14, **characterized by** the fact that a color of the material of the block (33) is selected according to the wavelength of the source so as to promote the propagation of the light emitted by the source while attenuating the propagation of the stray light.

## Patentansprüche

1. Vorrichtung zur Erzeugung optischer Bilder, mit
- einer Lichtquelle (13),
- einem optischen Medium (10), in dem das Licht von der Lichtquelle (13) sich fortsetzen kann,
- einer Abtastfläche (11), die definiert ist durch die Front des optischen Mediums (10),
- einem Bildaufnehmer (15), gegen den das Licht von der Lichtquelle (13), das eine Reflexion auf der Abtastfläche (11) erfährt, reflektiert wird,
welche Vorrichtung **dadurch gekennzeichnet ist, dass** sie so betrieben wird, dass die Lichtquelle (13) auf dem Bildaufnehmer (15) als ausreichend punktförmig erscheint, dass ein Bild direkt auf dem Bildaufnehmer (15) gebildet werden kann, ohne dass ein Linsensystem benötigt wird, aufgrund der Tatsache, dass die Lichtquelle eine Leuchtdiode oder ein Laser ist, der keinen Diffusor oder keine Linsen aufweist, und weil die Lichtquelle (13) in dem optischen Medium angeordnet ist.

2. Vorrichtung nach Anspruch 1, **dadurch gekennzeichnet, dass** zwei Strahlen, die von zwei extremen Punkten der Lichtquelle abgegeben werden und durch denselben Punkt der Abtastoberfläche verlaufen, auf dem Bildaufnehmer (15) Bilder erzeugen, die wenigstens 100 µm Abstand aufweisen, insbesondere 50 µm.

3. Vorrichtung nach einem der vorhergehenden Ansprüche, **dadurch gekennzeichnet, dass** der Bildaufnehmer (15) in dem optischen Medium (10) angeordnet ist.

4. Vorrichtung nach einem der Ansprüche 1 und 2, **dadurch gekennzeichnet, dass** der Bildaufnehmer (15) außerhalb des optischen Mediums (10) angeordnet ist.

5. Vorrichtung nach einem der vorhergehenden Ansprüche, **dadurch gekennzeichnet, dass** sie derart betrieben wird, dass das Licht, das von der Lichtquelle (13) abgegeben wird und den Bildaufnehmer (15) erreicht, nur an der Abtastfläche (11) reflektiert wird.

6. Vorrichtung gemäß einem der Ansprüche 1 bis 4, **dadurch gekennzeichnet, dass** sie derart betrieben wird, dass das Licht, das von der Lichtquelle abgegeben wird, wenigstens zweimal reflektiert wird, insbesondere im optischen Medium (10) vor Erreichen des Bildaufnehmers (15).

7. Vorrichtung gemäß einem der vorhergehenden Ansprüche, **dadurch gekennzeichnet, dass** der Bildaufnehmer (15) linear ist.

8. Vorrichtung gemäß einem der Ansprüche 1 bis 6, **dadurch gekennzeichnet, dass** der Bildaufnehmer (15) matrixförmig ist.

9. Vorrichtung gemäß einem der vorhergehenden Ansprüche, **dadurch gekennzeichnet, dass** die Lichtquelle (13) modular ist.

10. Vorrichtung gemäß einem der vorhergehenden Ansprüche, **dadurch gekennzeichnet, dass** die Lichtquelle (13) in mehreren Wellenlängen emittiert, sowie **dadurch**, dass der Bildaufnehmer (15) so betätigt wird, dass er Bilder analysiert, die jeder der Wellenlängen entsprechen.

11. Vorrichtung gemäß einem der vorhergehenden Ansprüche, **dadurch gekennzeichnet, dass** der Bildaufnehmer (15) von dem optischen Medium (10) trennbar ist, dass der Bildaufnehmer (15) integriert ist in einen beweglichen Träger, wie eine Bezahlkarte oder Zugangskarte (27), und dass das optische Medium (10) einen zugehörigen Leser (29) aufweist, der vorgesehen ist zur Zusammenarbeit mit der Zugangskarte (27), wobei der Träger wenigstens eine Mikroschaltung (26), insbesondere eine Mikroschaltung mit einem Computer oder wenigstens einem Speicher aufweist.

12. Vorrichtung nach einem der vorhergehenden Ansprüche, **dadurch gekennzeichnet, dass** die Lichtquelle (13) sich unterhalb des Niveaus der Fläche des Bildaufnehmers (15) befindet.

13. Vorrichtung nach Anspruch 12, **dadurch gekennzeichnet, dass** sich die Lichtquelle in einer Vertiefung einer gedruckten Schaltung, insbesondere einer mehrlagigen gedruckten Schaltung befindet.

14. Vorrichtung gemäß einem der vorhergehenden Ansprüche, **dadurch gekennzeichnet, dass** die Vorrichtung einen Block (33) eines transparenten Materials umfasst, das den Bildaufnehmer (15) und die Lichtquelle (13) abdeckt.

15. Vorrichtung nach Anspruch 14, **dadurch gekennzeichnet, dass** der Block auf dem Bildaufnehmer und der Lichtquelle durch Gießen hergestellt ist.

16. Vorrichtung nach Anspruch 14, **dadurch gekennzeichnet, dass** der Block auf den Bildaufnehmer und die Lichtquelle geklebt ist.

17. Vorrichtung nach Anspruch 16, **dadurch gekennzeichnet, dass** der Block wenigstens mit einem polymerisierbaren Kleber durch Behandlung mit ultravioletter Strahlung geklebt ist.

18. Vorrichtung nach Anspruch 14, **dadurch gekennzeichnet, dass** der Block (33) auf dem Bildaufnehmer (15) Mittel umfasst, die es gestatten, die Fehllichtmenge, die den Bildaufnehmer (15) erreicht, zu reduzieren.

19. Vorrichtung nach Anspruch 18, **dadurch gekennzeichnet, dass** die Mittel eine matte Oberfläche aufweisen.

20. Vorrichtung nach Anspruch 18, **dadurch gekennzeichnet, dass** die Mittel eine Maske aufweisen.

21. Vorrichtung nach Anspruch 14, **dadurch gekennzeichnet, dass** die Farbe des Blockmaterials (33) gewählt ist in Funktion der Wellenlänge der Lichtquelle, derart, dass die Fortpflanzung des Lichts, das durch die Lichtquelle abgegeben wird, erleichtert, Fehllicht aber unterdrückt wird.
